# EUROPÄISCHE PATENTSCHRIFT

(11) **EP 4 021 703 B1**
(45) Veröffentlichungstag und Bekanntmachung des Hinweises auf die Patenterteilung: **13.03.2024**
(21) Anmeldenummer: 20761808.3
(22) Anmeldetag: 25.08.2020
(51) Int. Cl.: B29C 64/10, B29C 64/20, B29C 64/205, B29C 64/241, B33Y 10/00, B33Y 30/00

(54) **3D-SIEBDRUCKANLAGE UND 3D-SIEBDRUCKVERFAHREN ZUR HERSTELLUNG EINES FORMKÖRPERS**
3D-SCREEN PRINTING PLANT AND 3D-SCREEN PRINTING METHOD FOR THE PRODUCTION OF A SHAPED BODY
INSTALLATION DE SÉRIGRAPHIE 3D ET PROCÉDÉ DE SÉRIGRAPHIE 3D POUR LA PRODUCTION D'UN OBJET

(30) Priorität: 28.08.2019 DE 102019123128
(43) Veröffentlichungstag der Anmeldung: 06.07.2022
(73) Patentinhaber: S.A.S 3DCeram-Sinto, 87270 Bonnac la Cote (FR)
(72) Erfinder: LÜHR, Susanne, 38678 Clausthal-Zellerfeld (DE)
(74) Vertreter: Cabinet Chaillot
(86) Internationale Anmeldenummer: PCT/EP2020/073745
(87) Internationale Veröffentlichungsnummer: WO 2021/037848

(56) Entgegenhaltungen:
- EP-A1- 3 482 939
- WO-A1-2018/146287
- DE-B4-112006 000 101

## Beschreibung

Die Erfindung betrifft eine 3D-Siebdruckanlage zur Herstellung mindestens eines Formkörpers in einem 3D-Siebdruckverfahren, bei dem der Formkörper schichtweise aufgebaut werden soll. Die Erfindung betrifft ebenso ein Verfahren zur Herstellung eines solchen Formkörpers in einem 3D-Siebdruckverfahren.

Bei den generativen oder additiven Fertigungsverfahren werden Formkörper (dreidimensionale Gegenstände) durch schichtweisen Aufbau hergestellt. Bei dem weit verbreiteten Vertreter dieser Fertigungstechnologie, dem 3D-Druck, wird entweder ein flüssiger oder fester Werkstoff an einer vorbestimmten Position durch einen Druckkopf ausgegeben oder ein Werkstoff innerhalb eines Bauraumes mittels einer Wärmequelle verfestigt, wodurch dreidimensionale Geometrien fast beliebiger Komplexität herstellbar sind.

Ein weiteres und bisher noch nicht so verbreitetes additives Fertigungsverfahren stellt der 3D-Siebdruck bzw. ein 3D-Siebdruckverfahren dar. Hierbei wird eine Druckmasse auf ein Drucksieb, welches eine Druckmaske enthält, aufgetragen und mittels einer Rakel in die Druckmaske eingearbeitet, sodass die durch die Druckmaske in dem Drucksieb bereitgestellte Kavität durch die Druckmasse ausgefüllt wird. Bei der Druckmasse handelt es sich meist um eine pulverbasierte Suspension bzw. ein pastöses Material. Anschließend wird der Abstand zwischen dem Drucksieb und dem Drucktisch, auf dem der Formkörper hergestellt wird, um den Betrag der Dicke des Drucksiebes erhöht, sodass eine erneute Schicht des Formkörpers mithilfe der Druckmaske auf den bereits bestehenden Teil des Formkörpers erstellt werden kann. Meist wird dabei der bereits bestehende Teil des Formkörpers durch eine Heizeinrichtung temperiert, um eine gewisse Mindestfestigkeit des Formkörpers durch ein Trocknen oder Abbinden für die weitere Bearbeitung zu gewährleisten.

Auf diese Weise kann Schicht für Schicht der Formkörper in einem 3D-Siebdruckverfahren hergestellt werden, wobei hier allerdings nur sogenannte 2,5D Strukturen aufgebaut werden können, da für jeden Querschnittswechsel im Bauteil in der Ebene des Drucksiebes und der Bauplattform das Drucksieb gewechselt werden muss.

Damit ist das bisher bekannte 3D-Siebdruckverfahren nicht im vollen Maße flexibel, wie dies beispielsweise bei anderen additiven oder generativen Fertigungsverfahren der Fall ist, da es nicht die Designfreiheit bezüglich Form und Geometrie bietet, wie es andere Additive oder generativen Fertigungsverfahren bieten können. Vielmehr wird das 3D-Siebdruckverfahren in der Regel dann angewendet, wenn Formkörper mit über die Länge unverändertem Querschnitt (sogenannte 2,5D Geometrie) erstellt werden sollen.

Bei Formkörpern, die jedoch aus mehreren unterschiedlichen Querschnitten zusammengesetzt werden sollen, besteht das Problem darin, dass bei einem Querschnittswechsel jedes Mal das Drucksieb mit der darin enthaltenen Druckmaske gewechselt werden muss, wodurch lange Rüstzeiten an der entsprechenden Anlage entstehen. Denn dass nicht mehr benötigte Drucksieb muss aus der Anlage herausgenommen und das neue Drucksieb mit den gewünschten Querschnitten eingesetzt werden.

Bauteile bzw. Formkörper, die in allen drei Raumrichtungen konstant ändernde Querschnitte aufweisen, sind für ein 3D-Siebdruckverfahren gänzlich ungeeignet. Zu diesen Bauteilgeometrien gehören insbesondere schraubenartige oder propellerartige Strukturen.

Da der 3D-Siebdruck als additives Fertigungsverfahren besonders für die Produktion von Bauteilen in hoher Stückzahl geeignet ist, ist es wünschenswert, auch Bauteilgeometrien mit ändernden, konstant ändernden oder alternierenden Querschnitten mithilfe eines derartigen additiven Fertigungsverfahrens herstellen zu können.

EP 3 482 939 betrifft ein Siebbereitstellungssystem, insbesondere für eine Druckvorrichtung, die eine Siebaufnahme für ein Drucksieb sowie eine der Siebaufnahme zugeordnete Rakeleinrichtung aufweist, mit einer Transporteinrichtung zum Transportieren jeweils eines Drucksiebs, mit zumindest einem Siebmagazin, das eine Vielzahl von Sieblagern zur Aufnahme jeweils eines Drucksiebs aufweist, und insbesondere mit zumindest einer Behandlungsstation zum Behandeln der Drucksiebe, wobei die Transporteinrichtung das Siebmagazin und insbesondere die zumindest eine Behandlungsstation mit Drucksieben bedient.

WO 2018/146287 betrifft ein Verfahren zum Herstellen eines dreidimensionalen Formgegenstands ohne Höhenbegrenzung mittels schichtweisem Materialauftrag.

DE 11 2006 000101 betrifft eine Siebdruckvorrichtung, umfassend: einen Drucktisch, wobei es sich bei einer Fläche des Drucktisches, auf der ein bahnförmiges Druckmaterial angeordnet ist, und die einer Druckmaske zugewandt ist, um eine konvexe Fläche handelt, wobei der Drucktisch drehbar ausgebildet ist, so dass der Druckmaske ein vorbestimmter Bereich zugewandt ist; die Druckmaske, die auf dem Drucktisch angeordnet ist; und eine Rakel, die über die Druckmaske gleitet, während sie die Druckmaske an das Druckmaterial auf dem Drucktisch drückt, wobei sich, wenn die Rakel über die Druckmaske gleitet, der Drucktisch dreht, um den zu bedruckenden Bereich des Druckmaterials, das auf der Fläche des Drucktisches angeordnet ist, die der Druckmaske zugewandt ist, in Kontakt mit einem Bereich der Druckmaske zu bringen, der einer Position entspricht, an der die Rakel gleitet, so dass die Druckpaste durch eine Andruckkraft der Rakel von der Druckmaske nach außen hin zu dem Druckmaterial gedrückt wird, wodurch das Drucken.

Es ist daher Aufgabe der vorliegenden Erfindung eine verbesserte 3D-Siebdruckanlage sowie ein verbessertes 3D-Siebdruckverfahren anzugeben, mit dem sich ändernde, konstant ändernde oder alternierende Querschnitte beliebiger Komplexität herstellen lassen.

Die Aufgabe wird mit der 3D-Siebdruckanlage gemäß Anspruch 1 sowie dem 3D-Siebdruckverfahren gemäß Anspruch 9 erfindungsgemäß gelöst. Vorteilhafte Ausgestaltungen der Erfindung finden sich in den entsprechenden Unteransprüchen.

Gemäß Anspruch 1 wird eine 3D-Siebdruckanlage vorgeschlagen, die zur Herstellung mindestens eines Formkörpers, vorzugsweise einer Mehrzahl von Formkörpern gleichzeitig, in einem additiven Fertigungsverfahren, d. h. in einem 3D-Siebdruckverfahren vorgesehen ist, indem mithilfe der 3D-Siebdruckanlage der mindestens eine Formkörper schichtweise aufgebaut wird.

Gattungsgemäß weist die 3D-Siebdruckanlage einen Drucktisch auf, auf dem der mindestens eine Formkörper schichtweise herstellbar ist bzw. hergestellt werden soll. Des Weiteren weist die 3D-Siebdruckanlage ein Drucksieb mit mindestens einer Druckmaske auf, wobei jede Druckmaske eine Schichtgeometrie zum schichtweisen Herstellen des jeweiligen Formkörpers aufweist.

Außerdem weist die 3D-Siebdruckanlage gattungsgemäß eine Auftragseinrichtung auf, die eingerichtet ist, eine Druckmasse auf das Drucksieb aufzutragen und in die Druckmasken zum Herstellen einer Formkörperschicht einzuarbeiten. Die Auftragseinrichtung kann hierfür ein oder mehrere Rakel (Flutrakel) aufweisen, mit der die Druckmasse über das Drucksieb verteilt und in die Kavitäten der Druckmasken hineingepresst bzw. eingearbeitet wird.

Schließlich weist die gattungsgemäße 3D-Siebdruckanlage eine erste Verstelleinrichtung auf, die eingerichtet ist, nach jeder hergestellten Formkörperschicht durch eine erste Relativbewegung den Abstand zwischen dem Drucktisch und dem Drucksieb zu erhöhen. Hierfür kann die erste Verstelleinrichtung mit dem Drucksieb zusammenwirken, sodass durch Anheben des Drucksiebes eine Relativbewegung zwischen Drucksieb und Drucktisch zum Erhöhen des Abstandes zwischen Drucksieb und Drucktisch erzeugt wird. Denkbar ist aber auch, dass die erste Verstelleinrichtung mit dem Drucktisch derart zusammenwirkt, dass dieser nach jeder hergestellten Formkörperschicht abgesenkt wird, um so die erste Relativbewegung zwischen Drucksieb und Drucktisch zum Erhöhen des Abstandes zwischen Drucksieb und Drucktisch zu erzeugen. Schließlich ist auch eine Kombination hiervon denkbar.

Erfindungsgemäß ist nun vorgesehen, dass das Drucksieb eine Mehrzahl von Druckmasken aufweist und die 3D-Siebdruckanlage eine zweite Verstelleinrichtung hat, die zum Ausführen einer zweiten Relativbewegung zwischen dem Drucktisch und dem Drucksieb derart ausgebildet ist, dass an einer Formkörperposition, an der ein einzelner Formkörper aufgebaut werden soll, nacheinander verschiedene Druckmasken des einen Drucksiebes einstellbar sind.

Es wird demzufolge vorgeschlagen, dass das Drucksieb eine Mehrzahl von Druckmasken aufweist, wobei an einer bestimmten Formkörperposition, an der ein einzelner Formkörper hergestellt werden soll, nacheinander verschiedene Druckmasken eingestellt werden, die dann dem Siebdruckprozess zugrunde gelegt werden. Das Einstellen einer neuen Druckmaske erfolgt dabei durch eine zweite Relativbewegung zwischen dem Drucktisch und dem Drucksieb insbesondere derart, dass hierbei das Drucksieb nicht aus der Anlage entfernt wird. Vielmehr verbleibt das Drucksieb in der Anlage und es wird lediglich eine neue Druckmaske in Bezug auf die bestimmte Formkörperposition eingestellt. Das schließt jedoch nicht aus, dass das Drucksieb während des Verfahrens gewechselt werden kann.

Mit anderen Worten ist die 3D-Siebdruckanlage eingerichtet, in einem ersten Prozessschritt eine erste Formkörperschicht eines jeweiligen Formkörpers unter Verwendung einer ersten Druckmaske des Drucksiebes herzustellen, dann nach Herstellung dieser ersten Formkörperschicht durch die zweite Verstelleinrichtung eine Relativbewegung zwischen dem Drucktisch und dem Drucksieb auszuführen, sodass an der Formkörperposition des jeweiligen Formkörpers eine zweite Druckmaske des Drucksiebes eingestellt ist, und anschließend in einem zweiten Prozessschritt eine zweite Formkörperschicht auf die erste Formkörperschicht unter Verwendung der zweiten Druckmaske des Drucksiebes herzustellen.

Hierdurch können Formkörper bzw. Bauteile in einem 3D-Siebdruckverfahren hergestellt werden, die sich ändernde, konstant ändernde oder alternierende Querschnitte beliebiger Komplexität aufweisen. Insbesondere lassen sich hierdurch schraubenartige oder propellerartigen Strukturen, wie später noch detailliert gezeigt wird, in einem 3D-Siebdruckverfahren herstellen.

Des Weiteren bietet die Erfindung die Möglichkeit, Bauteile mit sich ändernden Querschnitten in einem 3D-Siebdruckverfahren herzustellen, ohne hierbei hohe Rüstzeiten der 3D-Siebdruckanlage in Kauf nehmen zu müssen. Vielmehr lassen sich hierbei schnell und effizient Bauteile mit sich ändernden Querschnitten erstellen.

Unter einer Druckmaske im Sinne der vorliegenden Erfindung wird dabei der Bereich in einem Drucksieb verstanden, durch den eine Formkörperschicht mit einer entsprechenden Schichtgeometrie herstellbar ist. Der Bereich der Druckmaske weist dabei eine oder mehrere Kavitäten auf, in die die Druckmasse eingearbeitet wird, um die Formkörperschicht mit der durch die Druckmaske vorgegebenen Schichtgeometrie herzustellen. Erfindungsgemäß weist das Drucksieb dabei mehrere Druckmasken auf, die gleiche, d. h. identische, oder voneinander verschiedene Schichtgeometrie haben können.

Die erste Relativbewegung und die zweite Relativbewegung sind dabei im Sinne der vorliegenden Erfindung voneinander verschiedene Bewegungen, die jedoch auch gleichzeitig ausgeführt werden können. Bei der ersten Verstelleinrichtung und der zweiten Verstelleinrichtung kann es sich um getrennte Einheiten handeln oder aber auch um eine gemeinsame Verstelleinheit. Durch die zweite Relativbewegung ändert sich insbesondere nicht der Abstand zwischen dem Drucksieb und dem Drucktisch.

Die zweite Verstelleinrichtung kann zum Ausführen der zweiten Relativbewegung entweder mit dem Drucktisch und/oder dem Drucksieb zusammenwirken. So kann durch eine Bewegung des Drucktisches ohne Bewegung des Drucksiebes die zweite Relativbewegung realisiert werden. Denkbar ist aber auch, dass durch eine Bewegung des Drucksiebes ohne Bewegung des Drucktisches die zweite Relativbewegung realisiert wird. Denkbar ist schließlich aber auch eine Kombination von beidem.

Gemäß einer Ausführungsform ist vorgesehen, dass die zweite Verstelleinrichtung derart ausgebildet ist, dass die zweite Relativbewegung zwischen dem Drucktisch und dem einen Drucksieb innerhalb der durch den Drucktisch oder das Drucksieb aufgespannten Ebene ausgeführt wird. Hierbei wird der Drucktisch und/oder das Drucksieb parallel zu dem Drucktisch bzw. den einzelnen Formkörperschichten bewegt, sodass nach der Ausführung der zweiten Relativbewegung eine weitere Formkörperschicht durch eine oder mehrere Druckmasken herstellbar ist. Durch die zweite Relativbewegung ändert sich insbesondere nicht der Abstand zwischen dem Drucktisch und dem Drucksieb.

Gemäß einer Ausführungsform ist vorgesehen, dass die zweite Verstelleinrichtung zum Ausführen der zweiten Relativbewegung zwischen dem Drucktisch und dem einen Drucksieb als eine rotatorische und/oder translatorische Bewegung ausgebildet ist. Demzufolge wird der Drucktisch und/oder das Drucksieb rotatorisch und/oder translatorische durch die zweite Verstelleinrichtung bewegt, um nacheinander verschiedene Druckmasken des einen Drucksiebes an einer jeweiligen Formkörperposition einzustellen.

Gemäß einer Ausführungsform ist vorgesehen, dass die 3D-Siebdruckanlage eine Heizeinrichtung hat, die eingerichtet ist, den Formkörper und/oder eine einzelne Formkörperschicht zu temperieren. So ist es denkbar, dass nach jeder hergestellten Formkörperschicht die zuletzt erzeugte Formkörperschicht temperiert wird, um diese zumindest soweit auszuhärten/zu trocknen, dass eine weitere Formkörperschicht auf die bereits hergestellten Formkörperschichten hergestellt werden kann. Denkbar ist aber auch, dass nach Fertigstellung des vollständigen Formkörpers, d. h. nach dem erzeugen der letzten Formkörperschicht, das Bauteil insgesamt temperiert und in einem Sinterprozess vollständig ausgehärtet wird.

Gemäß einer Ausführungsform ist vorgesehen, dass die zweite Verstelleinrichtung zum Ausführen einer rotatorischen Relativbewegung zwischen dem Drucktisch und dem einen Drucksieb um eine Drehachse ausgebildet ist, wobei in dem Drucksieb auf mindestens einem konzentrischen Kreis um die Drehachse eine Mehrzahl von Druckmasken angeordnet sind. Hierbei kann entweder der Drucktisch oder das Drucksieb oder beide um die Drehachse rotatorisch bewegt werden, um die auf dem konzentrischen Kreis um die Drehachse angeordneten Druckmasken jeweils nacheinander an einer bestimmten Formkörperposition einzustellen.

Hierdurch wird es möglich, nacheinander durch Erzeugen einer Relativbewegung um einen gewissen Winkel an verschiedenen Formkörperposition jeweils eine neue Druckmaske einzustellen, ohne dass hierfür das Drucksieb aus der Anlage genommen werden muss. Vielmehr können gleichzeitig und parallel mehrere Formkörper mit sich verändernden Querschnitten, insbesondere schraubenartige oder propellerartige Strukturen, erzeugt werden.

Gemäß einer Ausführungsform hierzu ist vorgesehen, dass in dem Drucksieb eine Mehrzahl von konzentrischen Kreisen um die Drehachse vorgesehen sind, auf denen jeweils eine Mehrzahl von Druckmasken angeordnet sind.

Gemäß einer Ausführungsform hierzu ist vorgesehen, dass alle Druckmasken, die in dem Drucksieb auf einem gemeinsamen konzentrischen Kreis um die Drehachse angeordnet sind, hinsichtlich ihrer zu erzeugenden Schichtgeometrie und/oder ihrer geometrischen Ausrichtung identisch sind.

Damit kann erreicht werden, dass an einer bestimmten Formkörperposition durch das nacheinander Einstellen der Druckmasken diese sich in Bezug auf die Formkörperposition hinsichtlich ihrer geometrischen Ausrichtung konstant verändern, wodurch sich schnell und effizient schraubenartige oder propellerartige Strukturen herstellen lassen.

Gemäß einer Ausführungsform ist vorgesehen, dass alle Druckmasken in dem Drucksieb auf dem gemeinsamen konzentrischen Kreis um die Drehachse äquidistant angeordnet sind, wobei der Winkel zwischen zwei Druckmasken einem ganzzahligen Vielfachen eines Vollkreises entspricht.

Gemäß Anspruch 9 wird ein Verfahren zur Herstellung mindestens eines Formkörpers in einem 3D-Siebdruckverfahren vorgeschlagen, bei dem der Formkörper schichtweise aufgebaut wird, wobei das Verfahren die folgenden Schritte umfasst:
- Auftragen einer Druckmasse auf ein Drucksieb, welches eine Mehrzahl von Druckmasken hat, die jeweils eine Schichtgeometrie zum schichtweisen Herstellen des mindestens einen Formkörpers auf einem Drucktisch haben, und Einarbeiten der Druckmasse in wenigstens eine Druckmaske des Drucksiebes zum Herstellen einer Formkörperschicht;
- wobei nach jeder hergestellten Formkörperschicht durch eine erste Relativbewegung der Abstand zwischen dem Drucktisch und dem Drucksieb erhöht wird; und
- Ausführen wenigstens einer zweiten Relativbewegung zwischen dem Drucktisch und dem Drucksieb mittels einer zweiten Verstelleinrichtung derart, dass an einer Formkörperposition, an der der wenigstens eine Formkörper aufgebaut werden soll, nacheinander verschiedene Druckmasken des einen Drucksiebes eingestellt werden.

Vorteilhafte Ausgestaltungen des Verfahrens finden sich in den entsprechenden Unteransprüchen.

Als Materialien für den Siebdruck können Keramik, Metall, Glas, Kunststoff sowie Mischungen aus diesen Materialgruppen oder Kompositmischungen verwendet werden. Darüber hinaus sind aus der Gruppe der Keramik in das Siliziumkarbid, Korund, Aluminiumoxid, Zirkonoxid, Cordierit, Phosphatkeramiken sowie tonhaltige Keramiken denkbar. Aus der Gruppe der Glaswerkstoffe ist insbesondere Silizium denkbar. Aus der Gruppe der Metalle sind Edelstahl, Eisen oder eisenhaltige Metalle, Kupfer, Wolfram, Molybdän sowie Aluminium denkbar. Auch Kunststoffe wie Acrylate oder Silikone sind möglich.

Die Erfindung wird anhand der beigefügten Figuren beispielhaft näher erläutert. Es zeigen:
- Figur 1: schematische Darstellung einer 3D-Siebdruckanlage;
- Figur 2: schematische Darstellung eines Drucksiebes der erfindungsgemäßen 3D-Siebdruckanlage;
- Figur 3: beispielhafte Darstellung der Veränderung der Druckmaske durch die zweite Relativbewegung.

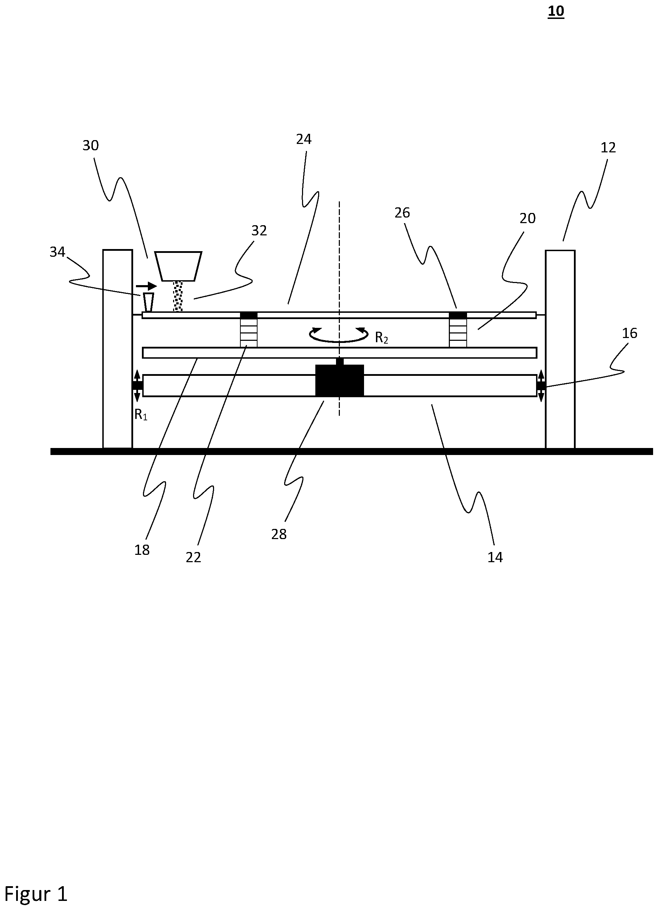

Figur 1 zeigt schematisch die erfindungsgemäße 3D-Siebdruckanlage 10 mit ihren gattungsgemäßen und vor allem neuartigen Elementen. Die Anlage 10 weist ein Gestell 12 auf, an dem ein Tragrahmen 14 mittels einer ersten Verstelleinrichtung 16 vertikal beweglich angeordnet ist.

An dem Tragrahmen 14 ist des Weiteren ein Drucktisch 18 angeordnet, auf dem ein oder mehrere Formkörper 20 schichtweise aus einzelnen Formkörperschichten 22 hergestellt werden sollen. Über dem Drucktisch 18 ist an dem Gestell 12 des Weiteren ein Drucksieb 24 fest angeordnet, mit dem die einzelnen Formkörperschichten 22 mittels in dem Drucksieb 24 vorgesehenen Druckmasken 26 hergestellt werden können.

Wird nun mittels der ersten Verstelleinrichtung 16 der Tragarme 14 vertikal bewegt, so wird auch der Drucktisch 18 vertikal bewegt, sodass aufgrund dieser ersten Relativbewegung R₁ der Abstand zwischen dem Drucktisch 18 und dem Drucksieb 24 verändert, insbesondere vergrößert werden kann.

Die Anlage 10 weist des Weiteren eine Auftragseinrichtung 30 auf, mit der eine Druckmasse 32 auf die Oberseite des Drucksiebes 24 appliziert werden kann. Mithilfe einer gegenüber dem Drucksieb 24 verfahrbaren Rakel 34 kann dann die Druckmasse 32 über dem Drucksieb 24 verteilt und in die Druckmasken 26 des Drucksiebes 24 eingearbeitet werden.

Des Weiteren weist die Siebdruckanlage 10 eine zweite Verstelleinrichtung 28 auf, die zwischen dem Tragrahmen 14 und dem Drucktisch 18 so angeordnet ist und mit dem Drucktisch 18 so zusammenwirkt, dass dieser um die Drehachse D rotatorisch bewegt werden kann. Der Drucktisch 18 ist demzufolge über die zweite Verstelleinrichtung 28 so in der Siebdruckanlage 10 befestigt, dass der Drucktisch 18 gegenüber dem Tragrahmen 14 sowie dem Drucksieb 24 relativ bewegt bei ist. Die hierdurch erzeugbare Relativbewegung ist mit R₂ gekennzeichnet.

Durch die Drehung des Drucktisches 18 wird es möglich, an einer Formkörperposition, an der ein bestimmter Formkörper 20 hergestellt werden soll, verschiedene Druckmasken 26 einzustellen, um so verschiedener Querschnitte zu realisieren, ohne hierfür die Siebdruckanlage mit einem neuen Drucksieb auszurüsten.

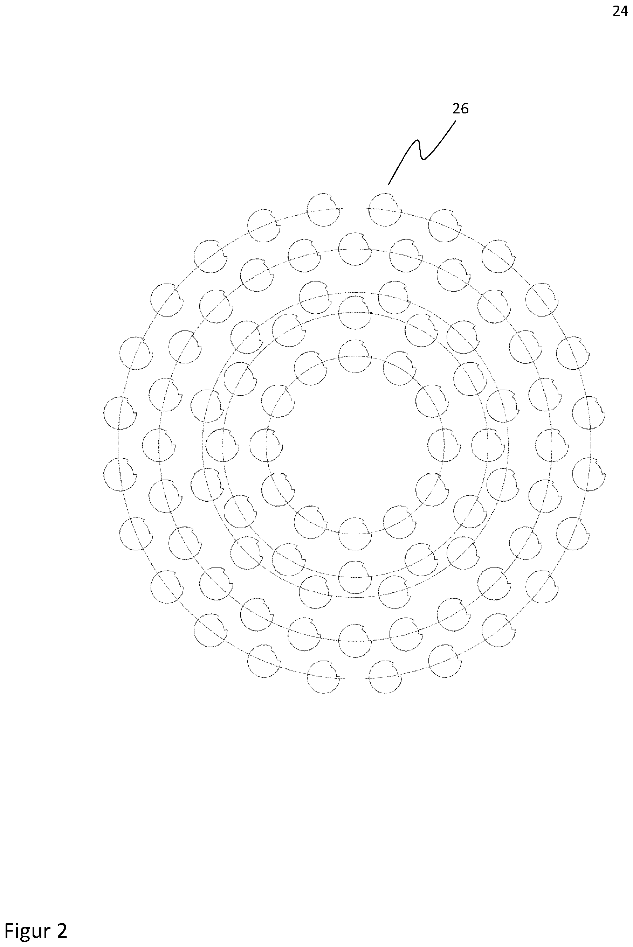

Figur 2 zeigt hierbei eine vorteilhafte Ausführungsform, bei der auf dem Drucksieb 24 die Druckmasken 26 auf konzentrischen Kreisen um die Drehachse D äquidistant gruppiert sind. An jeder Stelle, wo sich in dem Drucksieb 24 eine Druckmaske 26 befindet, kann jeweils ein einzelner Formkörper hergestellt werden, sofern der Wickel zwischen zwei Druckmasken 26, die auf einem gemeinsamen konzentrischen Kreis um die Drehachse D äquidistant angeordnet sind, einem ganzzahligen Vielfachen eines Vollkreises entspricht, also die Druckmasken 26 zueinander nicht verdreht sind. Wird aufgrund der Relativbewegung die Ausrichtung zwischen dem Drucktisch und dem Drucksieb um genau jenen Winkel verändert, der dazu führt, dass die auf einem konzentrischen Kreis entgegen der Drehrichtung vorangehenden Druckmasken 26 auf die nächst folgende Druckmaske 26 oder die übernächste oder überübernächste usw. der Bauteilgeometrie entsprechend fällt, so wird an jeder Position, die durch eine entsprechende Druckmaske 26 in dem Drucksieb 24 gebildet wird, die jeweils nachfolgende, nachnachfolgende, usw. Druckmaske an der betreffenden Formkörperposition eingestellt.

Im Ausführungsbeispiel der Figur 2 ist des Weiteren gezeigt, dass jede Druckmaske 26 in dem Drucksieb 24 eine identische Schichtgeometrie sowie identische geometrische Ausrichtung hat. Aufgrund der Relativbewegung zwischen dem Drucktisch 18 und dem Drucksieb 24 verändert sich die geometrische Ausrichtung der Druckmasken 26 in Bezug zu einer entsprechenden Formkörperposition genau um den Winkel, der für die translatorische Bewegung der einen Maske auf die andere auf dem konzentrischen Kreis notwendig ist, wodurch insbesondere schraubenartige oder Propeller Formkörper herstellbar sind.

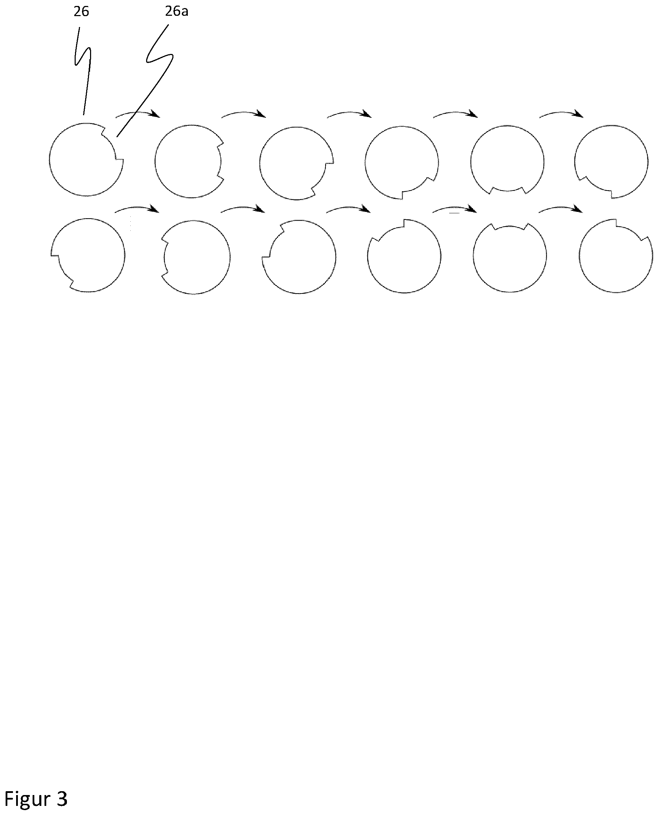

Eine solche Veränderung der Druckmaske in Bezug zu einer entsprechenden Formkörperposition ist dabei in der Figur 3 gezeigt. An einer betreffenden Formkörperposition ändert sich dabei die Druckmaske 26 hinsichtlich ihrer geometrischen Ausrichtung bei jeder Relativbewegung um den betreffenden Winkel, sodass die in der Druckmaske 26 vorgesehene eine Vertiefung 26a bei jeder Relativbewegung jeweils eine andere Ausrichtung hat.

### Bezugszeichenliste

- 10: 3D-Siebdruckanlage
- 12: Gestell
- 14: Tragrahmen
- 16: erste Verstelleinrichtung
- 18: Drucktisch
- 20: Formkörper
- 22: Formkörperschicht
- 24: Drucksieb
- 26: Druckmaske
- 28: zweite Verstelleinrichtung
- 30: Auftragseinrichtung
- 32: Druckmasse
- 34: Rakel
- D: Drehachse
- R₁: erste Relativbewegung
- R₂: zweite Relativbewegung

## Patentansprüche

1. 3D-Siebdruckanlage (10) zur Herstellung mindestens eines Formkörpers (20) in einem 3D-Siebdruckverfahren, bei dem der Formkörper (20) schichtweise aufgebaut werden soll, wobei die 3D-Siebdruckanlage (10) aufweist:
- einen Drucktisch (18), auf dem der mindestens eine Formkörper (20) schichtweise herstellbar ist;
- ein Drucksieb (24) mit mindestens einer Druckmaske (26), die eine Schichtgeometrie zum schichtweisen Herstellen des Formkörpers (20) aufweist;
- eine Auftragseinrichtung (30), die eingerichtet ist, eine Druckmasse (32) auf das Drucksieb (24) aufzutragen und in die Druckmasken (26) zum Herstellen einer Formkörperschicht (22) einzuarbeiten; und
- eine erste Verstelleinrichtung (16), die eingerichtet ist, nach jeder hergestellten Formkörperschicht (22) durch eine erste Relativbewegung (R₁) den Abstand zwischen dem Drucktisch (18) und dem Drucksieb (24) zu erhöhen;
wobei das Drucksieb (24) eine Mehrzahl von Druckmasken (26) aufweist und die 3D-Siebdruckanlage (10) eine zweite Verstelleinrichtung (28) hat, die zum Ausführen einer zweiten Relativbewegung (R₂) zwischen dem Drucktisch (18) und dem Drucksieb (24) **dadurch gekennzeichnet ist, dass** an einer Formkörperposition, an der ein einzelner Formkörper (20) aufgebaut werden soll, nacheinander verschiedene Druckmasken (26) des einen Drucksiebes (24) einstellbar sind.

2. 3D-Siebdruckanlage (10) nach Anspruch 1, **dadurch gekennzeichnet, dass** die zweite Verstelleinrichtung (28) derart ausgebildet ist, dass die zweite Relativbewegung (R₂) zwischen dem Drucktisch (18) und dem einen Drucksieb (24) innerhalb der durch den Drucktisch (18) oder das Drucksieb (24) aufgespannten Ebene ausgeführt wird.

3. 3D-Siebdruckanlage (10) nach einem der vorhergehenden Ansprüche,
**dadurch gekennzeichnet, dass** die zweite Verstelleinrichtung (28) zum Ausführen der zweiten Relativbewegung (R₂) zwischen dem Drucktisch (18) und dem einen Drucksieb (24) als eine rotatorische und/oder translatorische Bewegung ausgebildet ist.

4. 3D-Siebdruckanlage (10) nach einem der vorhergehenden Ansprüche,
**dadurch gekennzeichnet, dass** die 3D-Siebdruckanlage (10) eine Heizeinrichtung hat, die eingerichtet ist, den Formkörper (20) und/oder eine einzelne Formkörperschicht (22) zu temperieren.

5. 3D-Siebdruckanlage (10) nach einem der vorhergehenden Ansprüche,
**dadurch gekennzeichnet, dass** die zweite Verstelleinrichtung (28) zum Ausführen einer rotatorischen Relativbewegung (R₁, R₂) zwischen dem Drucktisch (18) und dem einen Drucksieb (24) um eine Drehachse (D) ausgebildet ist, wobei in dem Drucksieb (24) auf mindestens einem konzentrischen Kreis um die Drehachse (D) eine Mehrzahl von Druckmasken (26) angeordnet sind.

6. 3D-Siebdruckanlage (10) nach Anspruch 5, **dadurch gekennzeichnet, dass** in dem Drucksieb (24) eine Mehrzahl von konzentrischen Kreisen um die Drehachse (D) vorgesehen sind, auf denen jeweils eine Mehrzahl von Druckmasken (26) angeordnet sind.

7. 3D-Siebdruckanlage (10) nach Anspruch 5 oder 6, **dadurch gekennzeichnet, dass** alle Druckmasken (26), die in dem Drucksieb (24) auf einem gemeinsamen konzentrischen Kreis um die Drehachse (D) angeordnet sind, hinsichtlich ihrer zu erzeugenden Schichtgeometrie und/oder ihrer geometrischen Ausrichtung identisch sind.

8. 3D-Siebdruckanlage (10) nach einem der Ansprüche 5 bis 7, **dadurch gekennzeichnet, dass** alle Druckmasken (26) in dem Drucksieb (24) auf dem gemeinsamen konzentrischen Kreis um die Drehachse (D) äquidistant angeordnet sind, wobei der Winkel zwischen zwei Druckmasken (26) einem ganzzahligen Vielfachen eines Vollkreises entspricht.

9. Verfahren zur Herstellung mindestens eines Formkörpers (20) in einem 3D-Siebdruckverfahren, bei dem der Formkörper (20) schichtweise aufgebaut wird, wobei das Verfahren die folgenden Schritte umfasst:
- Auftragen einer Druckmasse (32) auf ein Drucksieb (24), welches eine Mehrzahl von Druckmasken (26) hat, die jeweils eine Schichtgeometrie zum schichtweisen Herstellen des mindestens einen Formkörpers (20) auf einem Drucktisch (18) haben, und Einarbeiten der Druckmasse (32) in wenigstens eine Druckmaske (26) des Drucksiebes (24) zum Herstellen einer Formkörperschicht (22);
- wobei nach jeder hergestellten Formkörperschicht (22) durch eine erste Relativbewegung (R₁) der Abstand zwischen dem Drucktisch (18) und dem Drucksieb (24) erhöht wird; und
- Ausführen wenigstens einer zweiten Relativbewegung (R₂) zwischen dem Drucktisch (18) und dem Drucksieb (24) mittels einer zweiten Verstelleinrichtung (28) derart, dass an einer Formkörperposition, an der der wenigstens eine Formkörper (20) aufgebaut werden soll, nacheinander verschiedene Druckmasken (26) des einen Drucksiebes (24) eingestellt werden.

10. Verfahren nach Anspruch 9, **dadurch gekennzeichnet, dass** eine 3D-Siebdruckanlage (10) gemäß einem der Ansprüche 1 bis 8 bereitgestellt wird, um das 3D-Siebdruckverfahren durchzuführen.

11. Verfahren nach Anspruch 9 oder 10, **dadurch gekennzeichnet, dass** die zweite Relativbewegung (R₂) zwischen dem Drucktisch (18) und dem einen Drucksieb (24) innerhalb der durch den Drucktisch (18) oder das Drucksieb (24) aufgespannten Ebene mittels der zweiten Verstelleinrichtung (28) ausgeführt wird.

12. Verfahren nach einem der Ansprüche 9 bis 11, **dadurch gekennzeichnet, dass** die zweite Relativbewegung (R₂) zwischen dem Drucktisch (18) und dem einen Drucksieb (24) als eine rotatorische und/oder translatorische Bewegung ausgeführt wird.

13. Verfahren nach einem der Ansprüche 9 bis 12, **dadurch gekennzeichnet, dass** der Formkörper (20) und/oder jede einzelne Formkörperschicht (22) mittels einer Heizeinrichtung temperiert wird.

14. Verfahren nach einem der Ansprüche 9 bis 13, **dadurch gekennzeichnet, dass** eine rotatorische Relativbewegung (R₁, R₂) zwischen dem Drucktisch (18) und dem einen Drucksieb (24) um eine Drehachse (D) mittels der zweiten Verstelleinrichtung (28) ausgeführt wird, wobei die Druckmasse (32) ein Drucksieb (24) aufgetragen wird, in dem auf mindestens einem konzentrischen Kreis um die Drehachse (D) eine Mehrzahl von Druckmasken (26) angeordnet sind, wobei die Druckmasse (32) in die Druckmasken (26) zur Herstellung der Formkörperschicht (22) eingearbeitet wird.

## Claims

1. - A 3D screen-printing apparatus (10) for producing at least one shaped article (20) in a 3D screen-printing method, in which the shaped article (20) is to be built up layer by layer, said 3D screen-printing apparatus (10) comprising:
- a printing table (18) on which the at least one shaped article (20) can be produced layer by layer;
- a printing screen (24) having at least one printing mask (26) which has a layer geometry for producing the shaped article (20) layer by layer;
- an application unit (30) configured to apply a printing material (32) onto the printing screen (24) and to work said material into the printing masks (26) to produce a shaped-article layer (22); and
- a first adjusting unit (16) configured to increase the distance between the printing table (18) and the printing screen (24) by way of a first relative movement (R1) after the production of each shaped-article layer (22) ;
the printing screen (24) comprising a plurality of printing masks (26), and the 3D screen-printing apparatus (10) having a second adjusting unit (28) which is characterized to perform a second relative movement (R2) between the printing table (18) and the printing screen (24) in that successively different printing masks (26) of the one printing screen (24) are adjustable at a shaped-article position, where an individual shaped article (20) is to be built.

2. - The 3D screen-printing apparatus (10) according to claim 1, **characterized in that** the second positioning unit (28) is configured in such a way that the second relative movement (R2) between the printing table (18) and the one printing screen (24) is performed within the plane defined by the printing table (18) or the printing screen (24)

3. - The 3D screen-printing apparatus (10) according to any one of the preceding claims, **characterized in that** the second adjusting unit (28) is configured to perform the second relative movement (R2) between the printing table (18) and the one printing screen (24) as a rotatory and/or translatory movement.

4. - The 3D screen-printing apparatus (10) according to any one of the preceding claims, **characterized in that** the 3D screen-printing apparatus (10) has a heating unit which is configured to control the temperature of the shaped article (20) and/or of an individual shaped-article layer (22).

5. - The 3D screen-printing apparatus (10) according to any one of the preceding claims, **characterized in that** the second adjusting unit (28) is configured to perform a rotatory relative movement (R1, R2) between the printing table (18) and the one printing screen (24) about a rotary axis (D), wherein a plurality of printing masks (26) are arranged in the printing screen (24) on at least one concentric circle about the rotary axis (D).

6. - The 3D screen-printing apparatus (10) according to claim 5, **characterized in that** a plurality of concentric circles about the rotary axis (D) are provided in the printing screen (24), on each of which a plurality of printing masks (26) are arranged.

7. - The 3D screen-printing apparatus (10) according to claim 5 or 6, **characterized in that** all printing masks (26), which are arranged in the printing screen (24) on a common concentric circle about the rotary axis (D), are identical regarding the layer geometry to be produced and/or their geometric alignment.

8. - The 3D screen-printing apparatus (10) according to any one of claims 5 to 7, **characterized in that** all printing masks (26) in the printing screen (24) are equidistantly arranged on the common concentric circle about the rotary axis (D), wherein the angle between two printing masks (26) corresponds to an integer multiple of a full circle.

9. - A method for producing at least one shaped article (20) in a 3D screen-printing method, in which the shaped article (20) is to be built up layer by layer, said method comprising the steps of:
- applying a printing material (32) on a printing screen (24) having a plurality of printing masks (26) each having a layer geometry for producing at least one shaped article (20) layer by layer on a printing table (18), and working the printing material (32) into at least one printing mask (26) of the printing screen (24) for producing a shaped-article layer (22);
- wherein, after the production of each shaped-article layer (22), by means of a first relative movement (R1), the distance between the printing table (18) and the printing screen (24) is increased; and
- performing at least one second relative movement (R2) between the printing table (18) and the printing screen (24) by means of a second adjusting unit (28) in such a manner that successively different printing masks (26) of the one printing screen (24) are adjusted at a shaped-article position, where the at least one shaped article (20) is to be built.

10. - The method according to claim 9, **characterized in that** a 3D-printing apparatus (10) according to any one of claims 1 to 8 is provided to perform the 3D screen-printing method.

11. - The method according to claim 9 or 10, **characterized in that** the second relative movement (R2) between the printing table (18) and the one printing screen (24) is performed by means of the second adjusting unit (28) within the plane defined by the printing table (18) or the printing screen (24).

12. - The method according to any one of claims 9 to 11, **characterized in that** the second relative movement (R2) between the printing table (18) and the one printing screen (24) is performed as a rotatory and/or translatory movement.

13. - The method according to any one of claims 9 to 12, **characterized in that** the shaped article (20) and/or each individual shaped-article layer (22) has its temperature controlled by means of a heating unit.

14. - The method according to any one of claims 9 to 13, **characterized in that** a rotatory relative movement (R1, R2) between the printing table (18) and the one printing screen (24) is performed about a rotary axis (D) by means of the second adjusting unit (28), wherein the printing material (32) is applied to a printing screen (24), in which a plurality of printing masks (26) are arranged on at least one concentric circle about the rotary axis (D), wherein the printing material (32) is worked into the printing masks (26) for producing the shaped-article layer (22).

## Revendications

1. - Installation de sérigraphie 3D (10) pour la fabrication d'au moins un corps façonné (20) dans un procédé de sérigraphie 3D, dans lequel le corps façonné (20) doit être construit par couches, l'installation de sérigraphie 3D (10) présentant :
- une table d'impression (18) sur laquelle ledit au moins un corps façonné (20) peut être fabriqué par couches ;
- un pochoir d'impression (24) ayant au moins un masque d'impression (26), lequel présente une géométrie de couche pour la fabrication par couches du corps façonné (20) ;
- un dispositif d'application (30) qui est configuré pour appliquer une masse d'impression (32) sur le pochoir d'impression (24) et pour l'incorporer dans les masques d'impression (26) pour la fabrication d'une couche de corps façonné (22) ; et
- un premier dispositif de réglage (16) qui est configuré pour augmenter la distance entre la table d'impression (18) et le pochoir d'impression (24) par un premier mouvement relatif (R1) après chaque couche de corps façonné (22) fabriquée,
le pochoir d'impression (24) présentant une pluralité de masques d'impression (26) et l'installation de sérigraphie 3D (10) ayant un second dispositif de réglage (28) qui est caractérisé pour l'exécution d'un second mouvement relatif (R2) entre la table d'impression (18) et le pochoir d'impression (24), par le fait que des masques d'impression (26) successivement différents du pochoir d'impression (24) sont réglables à une position de corps façonné à laquelle un corps façonné individuel (20) doit être construit.

2. - Installation de sérigraphie 3D (10) selon la revendication 1, **caractérisée par le fait que** le second dispositif de réglage (28) est configuré de telle sorte que le second mouvement relatif (R2) est exécuté entre la table d'impression (18) et le pochoir d'impression (24) dans le plan passant par la table d'impression (18) ou le pochoir d'impression (24).

3. - Installation de sérigraphie 3D (10) selon l'une des revendications précédentes, **caractérisée par le fait que** le second dispositif de réglage (28) est configuré pour l'exécution du second mouvement relatif (R2) entre la table d'impression (18) et le pochoir d'impression (24) en tant que mouvement de rotation et/ou de translation.

4. - Installation de sérigraphie 3D (10) selon l'une des revendications précédentes, **caractérisée par le fait que** l'installation de sérigraphie 3D (10) a un dispositif de chauffage qui est agencé pour contrôler la température du corps façonné (20) et/ou d'une couche individuelle de corps façonné (22).

5. - Installation de sérigraphie 3D (10) selon l'une des revendications précédentes, **caractérisée par le fait que** le second dispositif de réglage (28) est agencé pour l'exécution d'un mouvement relatif de rotation (R1, R2) entre la table d'impression (18) et le pochoir d'impression (24) autour d'un axe de rotation (D), plusieurs masques d'impression (26) étant disposés dans le pochoir d'impression (24) sur au moins un cercle concentrique autour de l'axe de rotation (D).

6. - Installation de sérigraphie 3D (10) selon la revendication 5, **caractérisée par le fait que** plusieurs cercles concentriques autour de l'axe de rotation (D) sont prévus dans le pochoir d'impression (24), sur chacun desquels plusieurs masques d'impression (26) sont disposés.

7. - Installation de sérigraphie 3D (10) selon l'une des revendications 5 ou 6, **caractérisée par le fait que** tous les masques d'impression (26) qui sont disposés dans le pochoir d'impression (24) sur un cercle concentrique commun autour de l'axe de rotation (D) sont identiques en ce qui concerne leur géométrie de couche à obtenir et/ou leur alignement géométrique.

8. - Installation de sérigraphie 3D (10) selon l'une des revendications 5 à 7, **caractérisée par le fait que** tous les masques d'impression (26) dans le pochoir de sérigraphie (24) sont disposés à égale distance sur le cercle concentrique commun autour de l'axe de rotation (D), l'angle entre deux masques d'impression (26) correspondant à un multiple entier d'un cercle complet.

9. - Procédé de fabrication d'au moins un corps façonné (20) dans un procédé de sérigraphie 3D, dans lequel le corps façonné (20) est construit par couches, le procédé comprenant les étapes suivantes :
- application d'une masse d'impression (32) sur un pochoir d'impression (24), lequel a une pluralité de masques d'impression (26) qui ont chacun une géométrie de couche pour la fabrication par couches dudit au moins un corps façonné (20) sur une table d'impression (18), et incorporation de la masse d'impression (32) dans au moins un masque d'impression (26) du pochoir d'impression (24) pour la fabrication d'une couche de corps façonné (22) ;
- dans lequel, après chaque couche de corps façonné (22) fabriquée, la distance entre la table d'impression (18) et le pochoir d'impression (24) est augmentée par un premier mouvement relatif (R1) ; et
- exécution d'au moins un second mouvement relatif (R2) entre la table d'impression (18) et le pochoir d'impression (24) au moyen d'un second dispositif de réglage (28) de telle sorte que des masques d'impression successivement différents (26) du pochoir d'impression (24) sont réglables à une position de corps façonné à laquelle ledit au moins un corps façonné doit être construit.

10. - Procédé selon la revendication 9, **caractérisé par le fait qu'**une installation de sérigraphie 3D (10) selon l'une des revendications 1 à 8 est prévue pour réaliser le procédé de sérigraphie 3D.

11. - Procédé selon l'une des revendications 9 ou 10, **caractérisé par le fait que** le second mouvement relatif (R2) entre la table d'impression (18) et le pochoir d'impression (24) est exécuté dans le plan passant par la table d'impression (18) ou le pochoir d'impression (24) au moyen du second dispositif de réglage (28).

12. - Procédé selon l'une des revendications 9 à 11, **caractérisé par le fait que** le second mouvement relatif (R2) entre la table d'impression (18) et le pochoir d'impression (24) est exécuté en tant que mouvement de rotation et/ou de translation.

13. - Procédé selon l'une des revendications 9 à 12, **caractérisé par le fait que** le corps façonné (20) et/ou chaque couche individuelle de corps façonné (22) est maintenu en température au moyen d'un dispositif de chauffage.

14. - Procédé selon l'une des revendications 9 à 13, **caractérisé par le fait qu'**un mouvement relatif de rotation (R1, R2) entre la table d'impression (18) et le pochoir d'impression (24) est exécuté autour d'un axe de rotation (D) au moyen du second dispositif de réglage (28), la masse d'impression (32) étant appliquée sur un pochoir d'impression (24), dans lequel plusieurs masques d'impression (26) sont disposés sur au moins un cercle concentrique autour de l'axe de rotation (D), la masse d'impression (32) étant incorporée dans les masques d'impression (26) pour la fabrication de la couche de corps façonné (22).
